Europäisches Patentamt

European Patent Office

Office européen des brevets

(11) Veröffentlichungsnummer: **0 350 831**
**A2**

(12) **EUROPÄISCHE PATENTANMELDUNG**

(21) Anmeldenummer: **89112568.4**

(22) Anmeldetag: **10.07.89**

(51) Int. Cl.4: **F23M 5/00 , F02F 3/12 , F02B 19/16**

(30) Priorität: **12.07.88 DE 3823510**

(43) Veröffentlichungstag der Anmeldung:
**17.01.90 Patentblatt 90/03**

(84) Benannte Vertragsstaaten:
**DE FR GB IT**

(71) Anmelder: **Kernforschungsanlage Jülich GmbH**
**Wilhelm-Jonen-Strasse**
**D-5170 Jülich(DE)**

(72) Erfinder: **Förster, Siegfried, Dr.**
**Ottenfeld 1**
**D-5110 Alsdorf(DE)**
Erfinder: **Quell, Peter, Dr.**
**Birkenweg 23**
**D-5100 Aachen(DE)**

(54) **Keramische Auskleidung für einen Brennraum.**

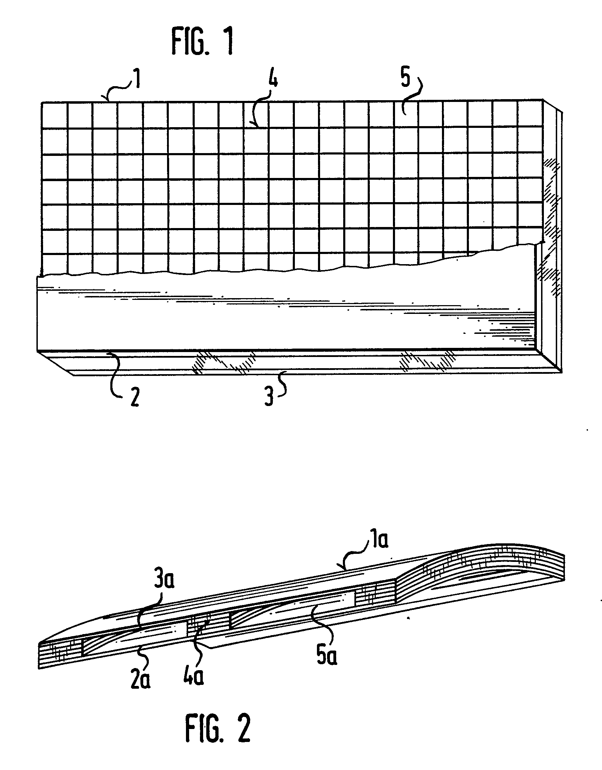

(57) Für einen Brennraum wird eine keramische Auskleidung mit in der Auskleidung vorhandenen Hohlräumen angegeben. Die Auskleidung (1) ist zum Brennraum (11) hin durch eine Innenwand (2) mit geringer Wärmekapazität begrenzt (Figur 1). Zwischen Innenwand (2) und Außenwand (3) der Auskleidung sind Abstützungen (4) vorgesehen, die zur Versteifung der Auskleidung dienen und dem im Brennraum entstehenden Druck entsprechend bemessen sind. Bevorzugt sind die Abstützungen wabenförmig gestaltet.

FIG. 1

EP 0 350 831 A2

## Keramische Auskleidung für einen Brennraum

Die Erfindung betrifft eine keramische Auskleidung für einen Brennraum. Die Auskleidung ist zwischen ihrer Innen- und Außenwand mit Hohlräumen ausgestattet.

Brennraumauskleidungen aus Keramik sind sowohl für Brennkammern als auch für Verbrennungsräume von Verbrennungsmotoren bekannt. Sie dienen zur Wärmedämmung zwischen heißem Brennraum und den ihn umgebenden metallischen Wandungen. Zu diesem Zweck sind die Auskleidungen kompakt aufgebaut und decken die metallischen Wände vollkommen ab. Nachteilig ist, daß vom Brennraum zur Auskleidungsoberfläche hin ein Temperaturgefälle auftritt, das zu Niederschlägen hochsiedender Bestandteile der eingesetzten Brennstoffe und zur Abscheidung von Crack-Produkten auf der Auskleidung führt, die dann unverbrannt auf der Auskleidung zu Rußschichten verschwelen. Darüber hinaus wird bei Wandtemperaturen, die unterhalb von 600°C liegen, bei der Verbrennung unerwünscht Kohlenmonoxid erzeugt.

Solche Verbrennungszustände treten in Brennkammern und Verbrennungsräumen insbesondere während der Startphase auf. Die Gefahr der Bildung von Niederschlägen an den keramischen Auskleidungen ist dabei umso höher, je höher die Wärmeleitfähigkeit der Auskleidung ist, da sich in diesem Falle mit den metallischen Wänden von Brennkammer und Ver brennungsraum ein rascher Temperaturausgleich ergibt.

Bekannt ist es deshalb, die Wärmeleitfähigkeit durch Hohlräume in der Auskleidung zu verringern, vergleiche Motortechnische Zeitschrift (MTZ) 47, 1986, S. 495 ff. Diese bekannte Auskleidung aus hochwarmfestem Material nimmt jedoch wegen ihrer Hohlräume und langen Wärmefließwege einen erheblichen Raum in Anspruch. Um den im Verbrennungsraum eines Verbrennungsmotors auftretenden hohen Drücken gerecht zu werden, ist auch konstruktiver Aufwand erforderlich, der mit keramischen Werkstoffen nur schwer erfüllbar ist.

Aufgabe der Erfindung ist es, eine keramische Auskleidung mit hoher Wärmedammwirkung und geringem Raumanspruch zu schaffen, bei der sich die Bildung von Niederschlägen von Brennstoffanteilen oder Crack-Produkten während des Betriebs sowie auch in der Startphase vermeiden läßt und die dennoch einen einfachen konstruktiven Aufbau aufweist.

Diese Aufgabe wird bei einer Auskleidung der eingangs genannten Art gemäß der Erfindung durch die in Patentanspruch 1 genannte Ausbildung gelöst. Die Auskleidung weist eine Innenwand mit geringer Wärmekapazität auf, die mit Abstützungen, die entsprechend dem herrschenden Druck im Brennraum bemessen sind, an der Außenwand der Auskleidung abgestützt ist. Die geringe Wärmekapazität wird vor allem durch Hohlräume zwischen dünner Innenwand und Außenwand bewirkt, was zu sehr rascher Aufheizung und Anpassung der Innenwand an die Temperatur im Brennraum führt. In kürzester Zeit nach Zündung des Brennstoffgemisches im Brennraum nimmt auch die Innenwand eine so hohe Temperatur an, daß die Verbrennung auch an den Wänden oder in Wandnähe befindlichen Brennstoff erfaßt. Die dem Druck im Brennraum entsprechend dimensionierten Abstützungen führen zusätzlich zu einer auf ein Minimum reduzierten Wärmeableitung. Es ergibt sich somit ein Wärmestau in der Innenwand, der die gewünschte rasche Aufheizung der Innenwand in der Startphase fördert.

Druckbelastbar ist die Auskleidung vor allem bei wabenförmiger Ausbildung der Abstützung, Patentanspruch 2. In diesem Falle bleibt auch die Wärmeabfuhr aus der Innenwand gering. Eine geringe Wärmeleitfähigkeit für die Auskleidung ergibt sich nach Patentanspruch 3 vor allem durch zusätzliche Anordnung zumindest einer Zwischenwand zwischen Innen- und Außenwand. Die Zwischenwand verläuft mit räumlichem Abstand zur Innen-und Außenwand. Nach Patentanspruch 4 ist es vorteilhaft, Abstützungen zwischen Innenwand und Zwischenwand sowie zwischen Zwischenwand und Außenwand fluchtend zueinander anzuordnen, um hohen Anforderungen an Druckbelastbarkeit der keramischen Auskleidung zu genügen.

Bevorzugt wird die Auskleidung sandwichartig ausgebildet, Patentanspruch 5. Dabei werden bevorzugt mehrere Zwischenwände eingesetzt. Die sandwich-Bauweise erlaubt es auch, die Abstützungen zwischen den Wänden zur Verringerung ihrer Wärmeleitfähigkeit aus dünnen einzelnen Schichten zusammenzusetzen.

Um Wärmespannungen zu vermeiden, wird die keramische Auskleidung nach Patentanspruch 6 in kera misches Fasermaterial eingebettet. Dieses ist zweckmaßig für keramische Auskleidungen an ebenen Wänden des Verbrennungsraums eines Verbrennungs motors, dort insbesondere bei Einsatz der keramischen Auskleidung im an den Verbrennungsraum angrenzenden Kolbenboden und im Zylinderkopf eines Kolbenmotors. Im zuletzt genannten Fall werden dann neben den Wärmespannungen auch dynamische Druckbelastungen abgefangen. Zweckmäßig ist es, die keramische Auskleidung auf kraftschlüssigen Halterungen zu lagern, Patentanspruch 7. Wärmedehnungen quer zur Stützebene der Halterungen sind dann spannungsfrei beherrschbar.

Wärmespannungen lassen sich zweckmäßig vor allem durch Wärmedehnungsfugen in der Innenwand abfangen, Patentanspruch 8.

Bei hohem Gasdruck im Brennraum, insbesondere in Verbrennungsräumen von Kolbenmotoren sind die Hohlräume gasdicht verschlossen, Patentanspruch 9.

Vorteilhaft ist es, die Auskleidung aus nebeneinander angeordneten keramischen Rohren auszubilden, Patentanspruch 10. Bei dieser Ausbildung der Auskleidung wird eine geringe Wärmeableitung erreicht, weil der unmittelbare wärmeleitende Kontakt zwischen Auskleidung und metallischem oder Keramischem Mantel der Verbrennungskammer oder des Verbrennungsraums quasi auf einen Linienkontakt der Rohre am Mantel beschränkt ist. Eine vom Brennraum aus gesehen glatte Innenwand läßt sich bei Verwendung keramischer Rohre durch dünnwandige Abdeckungen der Rohre auf ihren zum Brennraum hin gerichteten Rohrseiten erreichen, Patentanspruch 11.

Die Erfindung wird nachfolgend anhand von Ausführungsbeispielen näher erläutert. Die Zeichnung zeigt im einzelnen:

Figur 1 Auskleidung mit wabenförmiger Struktur;

Figur 2 sandwichtartig ausgebildete Auskleidung;

Figur 3 Auskleidung mit Zwischenwand, Schnitt gemäß Schnittlinie III/III nach Figur 4

Figur 4 Auskleidung mit Zwischenwand, Schnitt gemäß Schnittlinie IV/IV nach Figur 3.

Figur 5 Auskleidung mit Zwischenwand innerhalb eines Kolbenbodens;

Figur 6 Auskleidung einer Brennkammer;

Figur 7 aus keramischen Rohren bestehende Auskleidung einer Brennkammer.

In Figur 1 ist eine keramische Auskleidung 1 mit wabenförmiger Struktur perspektivisch dargestellt. Zwischen Innenwand 2 und Außenwand 3 der Auskleidung befindet sich eine gitterartige Abstützung 4, die in Figur 1 in einem Ausschnitt der Innenwand 2 erkennbar ist. Zwischen den Gitterstreben der Abstützung 4 verbleiben Hohlräume 5. Die Innenwand 2 ist so dimensioniert, daß sie kurzzeitig aufheizbar ist. Sie ist möglichst dünn ausgebildet, um eine geringe Wärmekapazität zu erhalten. Auch die Gitterstreben der Abstützung 4 sind schmal und dünnwandig, damit die Wärmeableitung aus der Innenwand gering bleibt. Die Maschenweite der die Innenwand 2 an der Außenwand 3 abstützenden Gitterstreben ist in Abhängigkeit vom Druck im zu wärmeisolierenden Brennraum gewählt.

Figur 2 zeigt eine Auskleidung 1a, die schalenartig gewölbt ist. Die Auskleidung besteht aus dünnen, durch Sintern miteinander verbundenen keramischen Schichten, wobei eine dünne Innenwand 2a mit einer Außenwand 3a über Abstützungen 4a verbunden ist, die aus übereinandergeschichteten Keramikbändern ausgebildet sind. Zwischen den Abstützungen 4a befinden sich von Innenwand 2a und Außenwand 3a abgedeckte Hohlräume 5a. Die übereinandergeschichteten Keramikbänder vermindern die Wärmeleitfähigkeit in den Abstützungen 4a zwischen Innenwand 2a und Außenwand 3a.

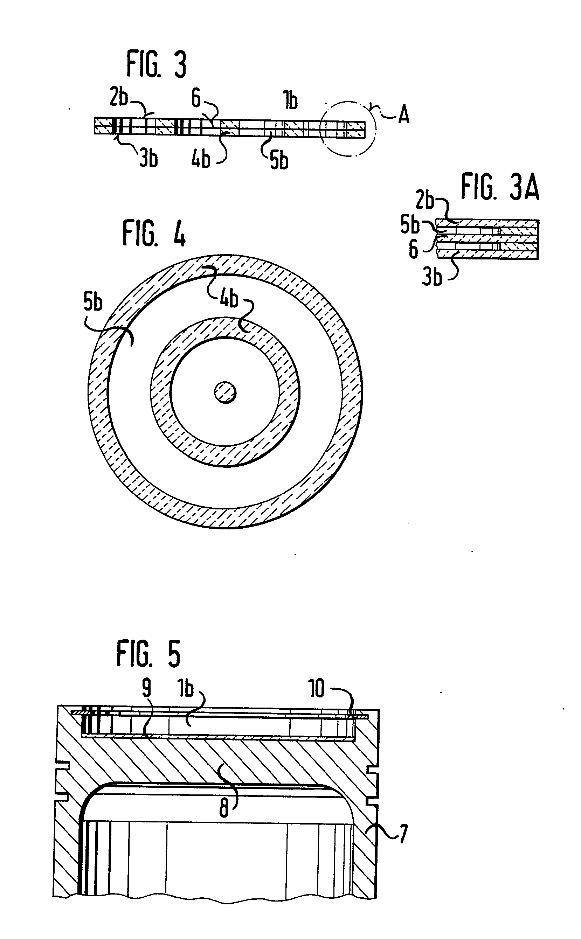

In Figuren 3 und 4 ist eine ringförmige Auskleidung 1b mit Zwischenschicht 6 dargestellt. Auch diese Auskleidung 1b besteht aus miteinander versinterten keramischen Schichten. Zwischen Innen- und Außenwand 2b, 3b und der Zwischenschicht 6 werden von Abstützungen 4b zwischen den Wänden Hohlräume 5b gebildet, die nach außen hin verschlossen sind. Die Abstützungen 4b sind zwischen Innen- und Außenwand und der Zwischenschicht fluchtend angeordnet.

In Figur 5 ist ein Kolben 7 eines Kolbenmotors dargestellt, in dessen Kolbenboden 8 eine Auskleidung 1b, wie sie in Figuren 3 und 4 dargestellt wird, eingelegt ist. Die Auskleidung 1b ist im Kolbenboden 8 in keramischem Fasermaterial 9 eingebettet und mit einem Seegerring 10 kraftschlüssig im Kolben 7 gehalten. Die Auskleidung 1b ist auf der dem Verbrennungsraum zugewandten Seite des Kolbenbodens 8 angeordnet und mindert die Ableitung der im Verbrennungsraum entstehenden Wärme in den metallischen Kolben. Die Auskleidung ist dem im Verbrennungsraum auftretenden Druck entsprechend zu bemessen. Wesentlich für die Stabilität der Auskleidung ist dabei Abstand und Stärke der Abstützungen 4b. Der schichtweise Aufbau der Abstützungen führt dabei zu einer geringen Wärmeleitfähigkeit.

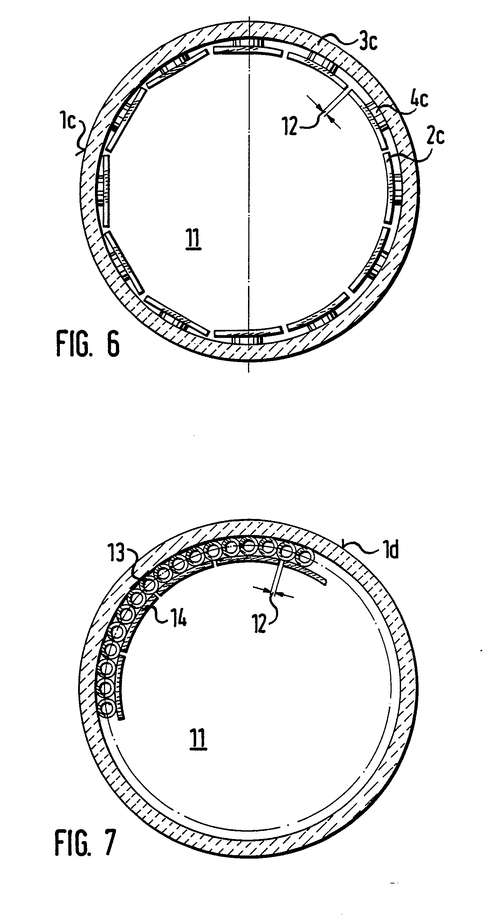

Eine keramische Auskleidung 1c für einen Brennraum 11 einer Brennkammer zeigt Figur 6. Die Auskleidung weist eine Innenwand 2c mit Wärmedehnungsfugen 12 auf, die axial in der zylindrischen Brennkammer verlaufen. Die auf diese Weise gebildeten Innenwandsegmente werden von Abstützungen 4c an der Außenwand 3c der Auskleidung 1c gehalten.

Eine weitere keramische Auskleidung 1d für einen zylindrischen Brennraum ist in Figur 7 dargestellt. Die Auskleidung 1d besteht aus benachbart angeordneten Rohren 13, die zum Brennraum hin mit dünnen Abdeckungen 14 versehen sind. Die Abdeckungen 14 beschleunigen die erste Aufheizung der Innenwand des Brennraumes und vermindern somit die in der Startphase an den Abdeckungen auftretenden unvollkommen ablaufenden Verbrennungsreaktionen.

Im Ausführungsbeispiel nach Figur 7 sind die Wärmedehnungsfugen 12 so angebracht sind, daß sich der Fugenverlauf und der Verlauf der Rohre 13 decken und Hohlräume 4d zwischen Abdeckungen 14 und Rohren 13 zum Brennraum hin nicht offen bleiben.

Bei allen Ausführungsbeispielen weisen die Innenwände der Auskleidungen geringe Wärmekapazitäten auf, die ein rasches Aufheizen der Innenwände und ein Anpassen ihrer Temperatur an die im Brennraum herrschende Temperatur ermöglichen. Die Auskleidungen sind so dimensioniert, daß die Innenwände nach Einsetzen der Verbrennung in wenigen Sekunden die zur vollständigen Verbrennung der Brennstoffe notwendige Temperatur erreichen. Die Innenwände befinden sich nach kurzer Zeit auf Rotglut. Bisher waren ausreichend hohe Wandtemperaturen in Brennkammern mit einfacher keramischer Isolation nach dem Start der Brenner in etwa 10-fach längeren Zeiträumen und bei Verbrennungsräumen von Kolbenmotoren an den Zylinderwänden überhaupt nicht erreichbar.

Die Abstützungen der Auskleidungen für Verbrennungsräume von Kolbenmotoren werden so bemessen, daß eine ausreichende Festigkeit der Auskleidung in Verbrennungsräumen bis zu Verbrennungsgasdrücken über 50 atm gewährleistet ist.

## Ansprüche

1. Keramische wärmeisolierende Auskleidung für einen Brennraum mit in der Auskleidung vorhandenen Hohlräumen und mit einer den Brennraum begrenzenden Innenwand mit geringer Wärmekapazität sowie mit Abstützungen für die Auskleidung,
**dadurch gekennzeichnet,**
daß Abstützungen (4) der Innenwand (2) Begrenzungen für Hohlräume (5) zwischen Innenwand (2) und Außenwand (3) bilden, wobei die Hohlräume (5) von der Innenwand (2) zumindest teilweise überdeckt sind.

2. Keramische Auskleidung nach Anspruch 1,
**dadurch gekennzeichnet,**
daß die Hohlräume (5, 5a, 5b) zum Brennraum hin gasdicht verschlossen sind.

3. Keramische Auskleidung nach Anspruch 1 oder 2,
**dadurch gekennzeichnet,**
daß die Abstützungen (4) wabenförmig gestaltet sind.

4. Keramische Auskleidung nach einem der Ansprüche 1, 2 oder 3,
**dadurch gekennzeichnet,**
daß zwischen Außen- (3b) und Innenwand (2b) eine Zwischenwand (6) verläuft, die zur Ausbildung von Hohlräumen (5b) einen räumlichen Abstand zu Außen(3b) und Innenwand (2b) aufweist.

5. Keramische Auskleidung nach Anspruch 4,
**dadurch gekennzeichnet,**
daß Abstützungen (4b) zwischen Innenwand (2b) und Zwischenwand (6) sowie zwischen Zwischenwand (6) und Außenwand (3b) fluchtend zueinander angeordnet sind.

6. Keramische Auskleidung nach einem der vorhergehenden Ansprüche,
**dadurch gekennzeichnet,**
daß die Auskleidung (1a, 1b) sandwichartig ausgebildet ist.

7. Keramische Auskleidung nach einem der vorhergehenden Ansprüche,
**dadurch gekennzeichnet,**
daß die Auskleidung (1b) in keramischem Fasermaterial (9) eingebettet ist.

8. Keramische Auskleidung nach einem der vorhergehenden Ansprüche,
**dadurch gekennzeichnet,**
daß die Auskleidung (1b) auf kraftschlüssigen Halterungen (10) lagert.

9. Keramische Auskleidung nach einem der vorhergehenden Ansprüche,
**dadurch gekennzeichnet,**
daß die Innenwand (2c) Wärmedehnungsfugen (12) aufweist.

10. Keramische Auskleidung nach einem der vorhergehenden Ansprüche,
**dadurch gekennzeichnet,**
daß die Auskleidung (1d) aus nebeneinander angeordneten keramischen Rohren (13) besteht.

11. Keramische Auskleidung nach Anspruch 10,
**dadurch gekennzeichnet,**
daß die Rohre (13) zum Brennraum (11) hin dünnwandige Abdeckungen (14) aufweisen.

FIG. 1

FIG. 2

FIG. 3

2b    6    1b          A

3b    4b    5b

FIG. 3A

2b
5b
6

3b

FIG. 4

5b    4b

FIG. 5

9    1b    10

8

7

FIG. 6

FIG. 7